(19) Europäisches Patentamt
European Patent Office
Office européen des brevets

(11) **EP 2 685 248 A1**

(12) **DEMANDE DE BREVET EUROPEEN**

(43) Date de publication:
**15.01.2014   Bulletin 2014/03**

(51) Int Cl.:
***G01N 25/18*** *(2006.01)*

(21) Numéro de dépôt: **13176058.9**

(22) Date de dépôt: **11.07.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **13.07.2012   FR 1256787**

(71) Demandeur: **COMMISSARIAT A L'ENERGIE ATOMIQUE ET AUX ENERGIES ALTERNATIVES
75015 Paris (FR)**

(72) Inventeurs:
• **Pauchet, Joël
38140 Saint Martin D'uriage (FR)**
• **Rouillon, Ludovic
38250 VILLARD DE LANS (FR)**

(74) Mandataire: **Lebkiri, Alexandre
Cabinet Camus Lebkiri
87 Rue Taitbout
75009 Paris (FR)**

(54)   **Procédé de mesure de la conductivité thermique d'un matériau mince anisotrope**

(57)   La présente invention concerne un procédé de mesure de la conductivité thermique selon trois directions d'un matériau mince anisotrope (10) comportant les étapes consistant à : positionner à la surface du matériau (10) une pluralité N de capteurs (22) aptes à mesurer la température dudit matériau au niveau de N points de mesure ; générer un flux de chaleur ($\Phi$) à partir d'une source de chaleur (21) positionnée sur une surface dudit matériau (10) ; déterminer une cartographie de la température théorique du matériau (10) au niveau des N points de mesure des N capteurs (22) selon trois directions (x, y, z) au moyen d'un calculateur (400), déterminer une cartographie de la température réelle à la surface dudit matériau anisotrope par mesure de la température du matériau au niveau des N points de mesure des N capteurs (22) ; déterminer au moyen dudit calculateur (400) la conductivité thermique réelle ($\lambda_x$, $\lambda_y$, $\lambda_z$) dudit matériau anisotrope mince, selon trois directions, par une pluralité K d'ajustements de ladite conductivité thermique théorique minimisant la différence entre la température théorique et la température réelle pour chacun des N points de mesure de la température.

**Fig. 1**

EP 2 685 248 A1

**Description**

La présente invention concerne un procédé de mesure de la conductivité thermique d'un matériau mince anisotrope.

L'invention s'applique particulièrement à la mesure de la conductivité thermique des électrodes constituant la cellule des piles à combustible ou des électrolyseurs qui sont formées par des matériaux anisotropes de faible épaisseur.

D'une façon connue, les cellules, également appelées assemblage élémentaire, des piles à combustible, telles que les piles à combustible à membrane échangeuse de protons (PEMFC pour Proton Exchange Membrane Fuel Cell en langue anglaise) sont composées d'une membrane en polymère conducteur ionique (protonique pour le PEMFC), également appelé électrolyte, et de deux électrodes poreuses (anode et cathode) entourant l'électrolyte.

Les électrodes sont constituées d'une première zone de réactions électrochimiques, dite zone active, située au contact de l'électrolyte et d'une deuxième zone, dite zone de diffusion, permettant d'évacuer la vapeur d'eau produite et permettant d'homogénéiser la diffusion des gaz réactifs.

De part et d'autre de l'assemblage élémentaire, des plaques distributrices, également appelées plaques bipolaires, formées par l'alternance de dents et de canaux, permettent l'alimentation en hydrogène à l'anode, en air à la cathode ainsi que l'évacuation de l'eau produite. Elles permettent également la récupération d'électrons issus de la réaction d'oxydation à l'anode.

Le transfert ionique de la membrane est directement corrélé par sa teneur en eau. La nécessité de maintenir un état d'hydratation satisfaisant de la membrane fait de la gestion de l'eau un élément clef du fonctionnement de ce type de pile à combustible.

L'eau produite par la réaction électrochimique est évacuée vers les canaux de distribution des plaques bipolaires en passant au travers de la couche active et de la couche de diffusion de l'électrode. Dans ces différentes couches, l'eau produite sera sous la forme vapeur ou liquide en fonction des niveaux locaux de température au sein des différents éléments de la pile à combustible. Ainsi, l'assemblage élémentaire étant plus chaud que les canaux de distribution, le risque de condensation de l'eau dans les couches actives et les couches de diffusion est d'autant plus important que les couches sont peu conductrices thermiquement.

La présence de condensation dans les couches a pour effet d'augmenter la quantité d'eau liquide dans l'assemblage élémentaire réduisant ainsi l'accès des gaz par un phénomène dit de « noyage » et donc les performances de la pile à combustible.

Les couches actives et les couches de diffusion sont des couches minces de matériaux anisotropes (typiquement de 5 à 30 $\mu$m d'épaisseur pour la couche active et de 100 à 500 $\mu$m d'épaisseur pour la couche de diffusion) et déformables. Leurs propriétés de conductivité thermique dépendent de leur état de compression dans l'assemblage élémentaire et donc du serrage mécanique des cellules et de la présence locale d'un canal ou d'une dent en contact avec les couches.

Compte-tenu de l'architecture d'empilement d'une pile à combustible les transferts de chaleur se font soit dans l'épaisseur des composants (de la couche active vers le canal) soit dans le plan des composants au niveau des dents présentes entre chaque canal.

Il apparaît donc important de pouvoir déterminer la conductivité thermique des matériaux utilisés pour la réalisation des couches actives et de diffusions.

De nombreuses méthodes de mesure de la conductivité thermique sont connues, comme par exemple la méthode de mesure par l'application d'une plaque chaude à l'extrémité de l'échantillon créant un gradient thermique sur la longueur de l'échantillon. Cependant, cette méthode permet de déterminer la conductivité thermique selon une direction et donc par conséquent la conductivité thermique longitudinale et éventuellement transverse par le biais d'un deuxième test sur un échantillon différent ou encore par démontage puis remontage du même échantillon.

Ce type de méthode est difficilement applicable aux matériaux anisotropes déformables et non adapté aux couches minces que sont les couches actives et les couches de diffusion des piles à combustible, dont les propriétés thermiques sont dépendantes de l'écrasement du matériau. En effet, les conditions de mesure (i.e. serrage, forme de l'échantillon, ..) entre deux séries de mesure ne sont pas reproductibles suite à la manipulation de l'échantillon. Les conditions de mesures sont également difficilement reproductibles entre deux échantillons distincts.

La demande de brevet JP2005/214858 mentionne une méthode de mesure d'une conductivité thermique dans le plan d'un échantillon anisotrope. Toutefois, cette méthode de mesure ne permet pas de mesurer en une seule opération (i.e. sans manipulation de l'échantillon) la conductivité thermique longitudinale et transverse d'un échantillon anisotrope.

Ainsi, l'invention vise à proposer un procédé de mesure de la conductivité thermique permettant de déterminer en une seule opération expérimentale et sur un même échantillon, la conductivité longitudinale et transverse d'un échantillon anisotrope de faible épaisseur, typiquement d'une épaisseur variant entre quelques micromètres ($\mu$m) quelques centaines de $\mu$m.

A cette fin, l'invention propose un procédé de mesure de la conductivité thermique selon trois directions d'un matériau mince anisotrope comportant les étapes consistant à :

- positionner à la surface du matériau une pluralité $N$ de capteurs aptes à mesurer la température dudit matériau au niveau de $N$ points de mesure ;
- générer un flux de chaleur $\Phi$ à partir d'une source de chaleur positionnée sur une surface dudit matériau ;
- déterminer une cartographie de la température théorique du matériau au niveau des $N$ points de mesure des $N$ capteurs selon trois directions (x, y, z) au moyen d'un calculateur (400),
- déterminer une cartographie de la température réelle à la surface dudit matériau anisotrope par mesure de la température du matériau au niveau des $N$ points de mesure des $N$ capteurs ;
- déterminer au moyen dudit calculateur la conductivité thermique réelle ($\lambda_x$, $\lambda_y$, $\lambda_z$) dudit matériau anisotrope mince, selon trois directions, par une pluralité K d'ajustements de ladite conductivité thermique théorique minimisant la différence entre la température théorique et la température réelle pour chacun des $N$ points de mesure de la température.

Le procédé selon l'invention permet donc de déterminer, avec une précision contrôlable et quantifiable, les conductivités thermiques selon trois directions (conductivité thermique transverse, conductivité thermique longitudinale et conductivité thermique dans l'épaisseur) en une seule opération expérimentale, sur un même échantillon et sans manipulation (montage, démontage) de cet échantillon. Un tel procédé permet donc d'analyser des échantillons anisotropes de faible épaisseur sans démontage ce qui est essentiel pour caractériser des électrodes constituant la cellule des piles à combustible ou des électrolyseurs.

Le procédé selon l'invention peut également présenter une ou plusieurs des caractéristiques ci-dessous, considérées individuellement ou selon toutes les combinaisons techniquement possibles :

- ladite conductivité thermique théorique est ajustée tant que la conductivité thermique réelle ($\lambda_x$, $\lambda_y$, $\lambda_z$) calculée ne varie pas plus de $10^{-4}$ entre deux ajustements successifs
- ladite cartographie de la température théorique est déterminée à partir de :

  - la température ambiante,
  - le flux de chaleur généré par ladite source de chaleur,
  - la conductivité thermique théorique du matériau anisotrope ;
  - la géométrie de la source de chaleur ;

- le procédé comporte une étape de serrage dudit matériau anisotrope dans un outillage de serrage de manière à comprimer ledit matériau dans un état donné ;
- ladite source de chaleur est formée par un micro-fil s'étendant au moins sur une partie dudit matériau ;
- lesdits N capteurs sont formés par des micro-fils s'étendant au moins sur une partie dudit matériau ;
- lesdits capteurs sont positionnés sur la face supérieure et la face inférieure dudit matériau ;
- lesdits capteurs sont positionnés sur deux faces dudit matériau ;
- ladite étape de positionnement des $N$ capteurs est réalisée au moyen d'un outillage de positionnement permettant de connaître avec une précision inférieure à dix micromètres, la position relative des différentes capteurs par rapport à ladite source de chaleur ;
- ledit matériau mince anisotrope est une cellule électrochimique d'une pile à combustible.

L'invention a également pour objet un outillage de positionnement pour la mise en oeuvre du procédé de mesure de la conductivité thermique selon l'invention **caractérisé en ce qu'il** comporte :

- un premier peigne présentant une pluralité $N$+1 de rainures ;
- un deuxième peigne présentant une pluralité $N$+1 de rainures ;

le premier et le deuxième peignes étant agencés de manière à ce que les rainures du premier peigne soient en vis-à-vis des rainures du deuxième peigne, lesdites N+1 rainures des peignes étant aptes à recevoir lesdits $N$ capteurs et ladite source de chaleur.

Avantageusement, l'outillage comporte des moyens aptes à maintenir en tension lesdits capteurs et ladite source de chaleur.

D'autres caractéristiques et avantages de l'invention ressortiront plus clairement de la description qui en est donnée ci-dessous, à titre indicatif et nullement limitatif, en référence aux figures annexées, parmi lesquelles :

- la figure 1 illustre un schéma d'un exemple de mode opératoire du procédé de mesure de la conductivité thermique d'un matériau mince anisotrope selon l'invention ;
- la figure 2 illustre un schéma synoptique présentant les principales étapes du procédé de pilotage selon l'invention ;

- la figure 3 représente un dispositif de positionnement permettant la mise en oeuvre du procédé de mesure selon l'invention :
- la figure 4 représente un diagramme présentant les principales étapes de calcul permettant la détermination de la conductivité thermique du matériau mince anisotrope à caractériser.

## DESCRIPTION D'AU MOINS UN MODE DE REALISATION

Dans toutes les figures, les éléments communs portent les mêmes numéros de référence.

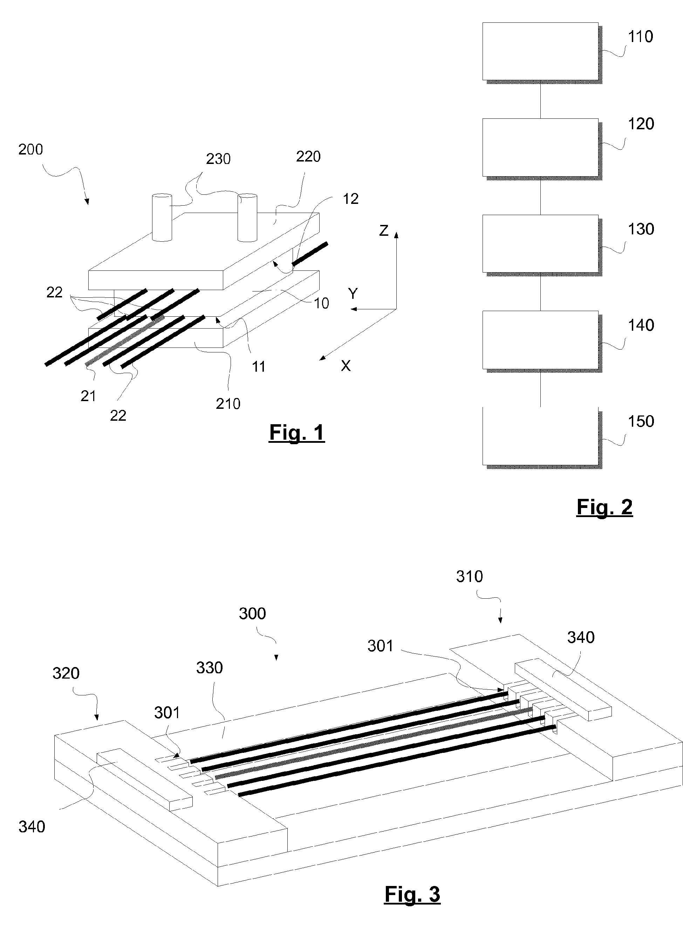

La figure 1 illustre un exemple de mode opératoire du procédé de mesure de la conductivité thermique d'un matériau anisotrope 10 présenté sous la forme d'un échantillon.

La première étape 110 du procédé 100, dont le schéma synoptique est illustré à la figure 2, consiste à positionner une pluralité de fils 21, 22 en contact avec l'échantillon 10 à caractériser. Les fils présentent un diamètre de l'ordre du micron ou de la dizaine de microns.

Dans l'exemple de réalisation illustré à la figure 1, un premier fil 21 est utilisé comme une source de chaleur générant un flux de chaleur Φ au niveau de la surface 11 de l'échantillon 10. Le flux de chaleur Φ se répartit à la surface de l'échantillon (suivant les directions X et Y) ainsi que dans son épaisseur (suivant la direction Z).

Les autres micros-fils, représentés par la référence 22, (sept fils 22 étant représentés à titre d'exemple) positionnés autour du fil chauffant 21 et sur la face supérieure sont utilisés comme capteur pour mesurer la température à la surface de l'échantillon 10. A cet effet, chaque fil de mesure 22 présente un point de mesure positionné astucieusement en fonction de l'échantillon à caractériser, de manière à réaliser une cartographie la plus représentative de la température à la surface de l'échantillon.

Les fils de mesure 22 sont positionnés à la périphérie de l'échantillon 10 (avantageusement sur la face supérieure et sur la face inférieure de l'échantillon 10, tel que représente à la figure 1), le positionnement des fils de mesure 22 étant déterminé en fonction du nombre de caractéristiques du matériau à déterminer ainsi que de la précision souhaité.

Le fil chauffant 21 est étendu au moins sur une grande partie de l'échantillon 10 à caractériser, et avantageusement sur toute la longueur de l'échantillon 10, de manière à créer un flux de chaleur stationnaire sur une grande partie de l'échantillon 10 (i.e. au moins sur les deux tiers de sa longueur).

Le nombre et le positionnement des fils de mesure 22 dépendent du type et du nombre de caractéristiques que l'on souhaite déterminer. Ainsi, grâce à l'invention, il est possible de déterminer, en une seule manipulation expérimentale, la conductivité thermique longitudinale (selon l'axe X), la conductivité thermique transverse (selon l'axe Y) ainsi que la conductivité thermique dans l'épaisseur du matériau (selon l'axe Z).

Cette première étape de positionnement 110 des micros-fils 21 et 22 est très importante car la connaissance précise des positions relatives des micros-fils 22 par rapport au fil chauffant 21 permet d'améliorer significativement la précision lors de l'étape de calcul des conductivités thermiques du matériau qui sera détaillée plus loin.

Un premier mode opératoire de cette étape de positionnement 110 est illustré à la figure 3. Dans ce mode opératoire, on utilise un outillage 300 formé par deux peignes 310, 320 présentant chacun une pluralité de rainures 301. Les deux peignes 310, 320 sont disposés solidairement de part et d'autre d'un cadre rigide 330. Les peignes 310, 320 sont positionnés de manière à ce que les rainures 301 d'un premier peigne se trouvent en regard et alignées avec les rainures 301 du deuxième peigne 320.

Ces deux peignes 310, 320 peuvent être réalisés par gravure sur des plaques de silicium de manière à créer les motifs des rainures. Les rainures 301 sont typiquement d'une largeur de 50 micromètres et d'une profondeur de 50 micromètres et sont espacées les unes des autres d'une distance variant d'une vingtaine de micromètres à plusieurs centaines de micromètres.

Chaque micro-fil 21 et 22 est inséré dans une des rainures 301 des peignes 310, 210 et tendu entre ces deux peignes 310, 320 par des moyens 340 prévus à cet effet. Ainsi, le positionnement relatif des micros-fils 21, 22 est connu de façon précise avec une précision inférieure à 10 micromètres.

Selon un deuxième mode opératoire de positionnement des micros-fils de mesure 22 (non représenté), les micros-fils 22 sont positionnés sur une plaque de mesure. Cette plaque de mesure est ensuite utilisée comme support pour recevoir l'échantillon.

Dans l'exemple de réalisation de l'invention illustré à la figure 1 consistant à déterminer la conductivité thermiques selon trois directions, telles que la conductivité thermique longitudinale $\lambda_x$, dans le sens longitudinal X, la conductivité thermique transverse $\lambda_y$, dans le sens transverse Y, et la conductivité thermique dans l'épaisseur $\lambda_z$ dans le sens de l'épaisseur Z, les fils de mesures 22 sont positionnés sur la face inférieure 11 et sur la face supérieure 12 de l'échantillon 10.

Quel que soit le mode opératoire de positionnement des micros-fils de mesure 22 utilisé, l'échantillon 10 et les micros-fils 21, 22 positionnés à la surface de l'échantillon 10, sont insérés dans un outillage de serrage 200 lors d'une deuxième étape 120.

L'outillage de serrage 200 comporte une plaque inférieure 210 et une plaque supérieure 220 qui sont situées de part et d'autre de l'échantillon 10. Les deux plaques 210 et 220 coopèrent avec des moyens de serrage 230 aptes à comprimer l'échantillon 10 dans un état de compression donné. Les plaques de serrage 210, 220 sont avantageusement deux à trois fois plus grandes que l'échantillon 10.

Ainsi, l'outillage de serrage 200 permet de simuler les conditions réelles d'utilisation du matériau anisotrope et ainsi mesurer les conductivités thermiques réelles lors de l'utilisation du matériau anisotrope mince. Par exemple un tel matériau anisotrope peut être utilisé comme membrane électrolytique dans un assemblage élémentaire d'une pile à combustible. Pour simuler une telle application, la plaque inférieure 210 et la plaque supérieure 220 forment l'anode et la cathode positionnées de part et d'autre de la membrane électrolytique.

Dans le deuxième mode opératoire de positionnement des micros-fils présenté précédemment, les plaques de mesure utilisées pour le positionnement des fils sont utilisées également pour former les plaques de serrage 210, 220 de l'outillage 200. L'échantillon 10 est donc placé sur ces plaques sur lesquelles les micros-fils 21, 22 sont positionnés.

Les plaques 210, 220 sont par exemple formées en polymères, avantageusement en polyimides (polymère à base d'imide).

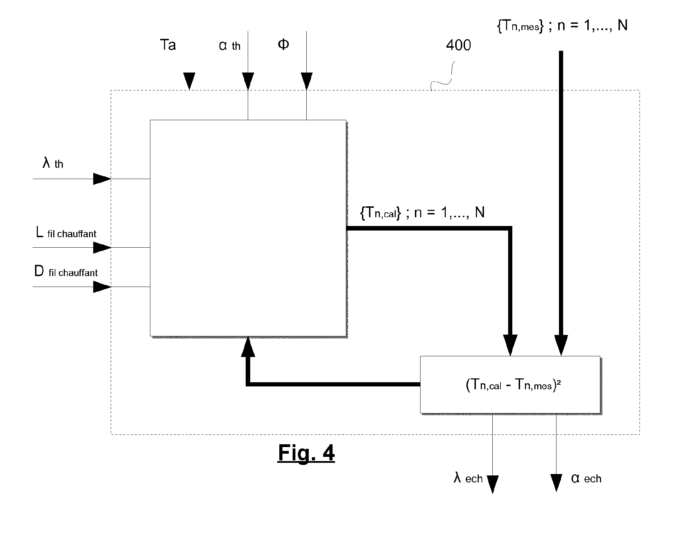

La troisième étape 130 du procédé 100 selon l'invention, illustrée à la figure 4, consiste à calculer, au moyen d'un calculateur comportant un modèle numérique 400, les *N* températures théoriques ($T_{n,calc}$ avec *n* = 1, ... *N*) à la surface de l'échantillon 10 au niveau des *N* points de mesures des *N* fils de mesures 22 positionnés lors des étapes précédentes. Cette troisième étape 130 de calcul permet de réaliser une cartographie thermique théorique de l'échantillon 10 en fonction du flux de chaleur Φ généré par le fil chauffant 21 et à partir de données d'entrée théoriques.

Pour cela, le modèle numérique 400 reçoit en entrée les données suivantes :

- la température ambiante Ta (°C) mesurée ;
- le coefficient d'échange α (W/m$^2$.°C) entre la surface du fil chauffant 21 et l'air ambiant :
- le flux de chaleur Φ (W) généré par le fil chauffant 21 ;
- au moins deux composantes théoriques du tenseur de conductivités thermiques du matériau λ ($\lambda_x$, $\lambda_y$, $\lambda_z$) (W/m.°C) ;

Le modèle numérique permet à partir des données d'entrée précitées ainsi que de données relatives à la géométrie du fil chauffant 21, telles que la longueur du fil et le diamètre du fil, de déterminer par l'utilisation de la loi de Fourrier, les *N* températures $T_{n,calc}$, avec *n* = 1, ... *N*, au niveau des *N* points de mesures des *N* fils de mesures 22.

Dans une quatrième étape 140 du procédé, les *N* températures calculées $T_{calc}$ sont comparés aux *N* températures mesurées $T_{mesu}$.

La cinquième étape 150 du procédé consiste à identifier les conductivités thermiques réelles de l'échantillon 10 au moyen du modèle numérique 30 faisant en sorte de modifier les paramètres du modèle de manière à ce que pour chaque température mesurée, la différence entre la température calculée et la température mesurée, pour un point n donné, tende vers 0, soit : $(T_{n,calc} - T_{n,mesu})^2 \rightarrow 0$, avec n = 1, ..., *N*.

Pour cela, plusieurs itérations *k* (k = 1, .., K) sont réalisées avec des jeux de paramètres à identifier différents. Dans l'exemple de réalisation, le jeu de paramètres à identifier $P_k$ représente : $P_k = (\lambda_x, \lambda_y, \lambda_y, \alpha)$.

Pour chacune des itérations *k*, les *N* températures calculées sont comparées aux *N* températures mesurées. Ainsi par l'application d'une procédure de minimisation selon la fonction suivante :

$$S(P) = \sum_{n=1}^{n=N} (T_{n,Calc,k}\, P(k) - T_{n,mesu,k})^2,$$

on détermine les valeurs optimales des paramètres P, via des méthodes dédiées à cet effet.

Avantageusement, les itérations de calcul sont stoppées dès lors que les conductivités thermiques calculées entre deux itérations successives ne varient pas de plus de 10$^{-4}$.

Le positionnement précis de ces capteurs grâce à l'utilisation des peignes 310, 320 permet d'augmenter la précision de détermination des conductivités thermiques. De même, la multiplication des capteurs permet également d'augmenter la précision de calcul. Ainsi, il est possible de modifier le nombre de capteur en fonction de la précision recherchée de manière à obtenir un rapport coût/précision optimisé à chaque application.

On notera qu'il est également possible de réaliser des essais en générant différents flux de chaleur, de manière à modifier les écarts de températures entre les différents capteurs et ainsi minimiser les incertitudes relatives aux capteurs.

L'invention selon l'invention permet donc de déterminer les conductivités thermiques selon trois directions en prenant en compte les pertes thermiques avec une précision importante, les équations de base du modèle numérique n'étant pas simplifiées. Grâce au procédé selon l'invention :

- l'incertitude relative du positionnement des capteurs est inférieure à ± 10 micromètres (μm) pour des fils de mesure

espacés de 100 $\mu$m ;

- l'incertitude sur la mesure de la température est de l'ordre de $\pm$ 0,1 °C.

Ainsi, à titre d'exemple, en utilisant six fils de mesure sur la face inférieure de l'échantillon, de part et d'autre du fil chauffant, et un fil de mesure sur la face supérieure de l'échantillon, le procédé permet d'obtenir une conductivité thermique longitudinale et transversale avec une erreur relative de l'ordre de 30% et une conductivité thermique dans l'épaisseur du matériau avec une erreur inférieure à 10%.

Selon l'exemple illustré à la figure 1, en utilisant quatre fils de mesure sur la face inférieure 11 de l'échantillon, de part et d'autre du fil chauffant, et trois fils de mesure sur la face supérieure 12 de l'échantillon, le procédé selon l'invention permet d'obtenir une conductivité thermique longitudinale et transversale avec une erreur relative de l'ordre de 50% et une conductivité thermique dans l'épaisseur du matériau avec une erreur relative de l'ordre de 5%.

Selon un autre mode de réalisation de l'invention, il est possible de s'affranchir de la détermination du coefficient d'échange $\alpha$, susceptible d'être inhomogène selon la géométrie et l'environnement du capteur, en réalisant les essais en régime transitoire. En d'autres termes, le principe est de générer un flux de chaleur pendant une courte durée et mesurer les températures avant que la partie extérieure du capteur (i.e. la partie non en contact avec l'échantillon) ne commence à monter en température.

Les autres avantages de l'invention sont notamment les suivants :

- reproductibilité des conditions de mesure (serrage, forme de l'échantillon, ..) ;
- possibilité de réaliser plusieurs contraintes de serrage sans démonter l'échantillon ;
- détermination de la conductivité thermique d'un matériau selon trois dimensions en une seule mesure ;
- maîtrise de la position des capteurs permettant d'accroitre la précision des conductivités thermiques.

## Revendications

1. Procédé de mesure de la conductivité thermique selon trois directions d'un matériau mince anisotrope (10) comportant les étapes consistant à :

   - positionner à la surface du matériau (10) une pluralité $N$ de capteurs (22) aptes à mesurer la température dudit matériau au niveau de $N$ points de mesure ;
   - générer un flux de chaleur ($\Phi$) à partir d'une source de chaleur (21) positionnée sur une surface dudit matériau (10) ;
   - déterminer une cartographie de la température théorique du matériau (10) au niveau des $N$ points de mesure des $N$ capteurs (22) selon trois directions (x, y, z) au moyen d'un calculateur (400),
   - déterminer une cartographie de la température réelle à la surface dudit matériau anisotrope par mesure de la température du matériau au niveau des $N$ points de mesure des $N$ capteurs (22) ;
   - déterminer au moyen dudit calculateur (400) la conductivité thermique réelle ($\lambda_x$, $\lambda_y$, $\lambda_z$) dudit matériau anisotrope mince, selon trois directions, par une pluralité K d'ajustements de ladite conductivité thermique théorique minimisant la différence entre la température théorique et la température réelle pour chacun des $N$ points de mesure de la température.

2. Procédé de mesure de la conductivité thermique selon trois directions d'un matériau mince anisotrope (10) selon la revendication précédente **caractérisé en ce que** ladite conductivité thermique théorique est ajustée tant que la conductivité thermique réelle ($\lambda_x$, $\lambda_y$, $\lambda_z$) calculée ne varie pas plus de $10^{-4}$ entre deux ajustements successifs.

3. Procédé de mesure de la conductivité thermique selon trois directions d'un matériau mince anisotrope (10) selon l'une des revendications précédentes **caractérisé en ce que** ladite cartographie de la température théorique est déterminée à partir de :

   - la température ambiante (Ta),
   - le flux de chaleur ($\Phi$) généré par ladite source de chaleur,
   - la conductivité thermique théorique ($\lambda_{theo}$) du matériau anisotrope ;
   - la géométrie de la source de chaleur (21) ;

4. Procédé de mesure de la conductivité thermique selon trois directions d'un matériau mince anisotrope (10) selon l'une des revendications précédentes **caractérisé en ce qu'il** comporte une étape de serrage dudit matériau anisotrope (10) dans un outillage de serrage de manière à comprimer ledit matériau dans un état donné.

**5.** Procédé de mesure de la conductivité thermique selon trois directions d'un matériau mince anisotrope (10) selon l'une des revendications précédentes **caractérisé en ce que** ladite source de chaleur est formée par un micro-fil s'étendant au moins sur une partie dudit matériau (10).

**6.** Procédé de mesure de la conductivité thermique selon trois directions d'un matériau mince anisotrope (10) selon l'une des revendications précédentes **caractérisé en ce que** lesdits $N$ capteurs (22) sont formés par des micro-fils s'étendant au moins sur une partie dudit matériau (10).

**7.** Procédé de mesure de la conductivité thermique selon trois directions d'un matériau mince anisotrope (10) selon l'une des revendications précédentes **caractérisé en ce que** lesdits capteurs (22) sont positionnés sur la face supérieure (12) et la face inférieure (11) dudit matériau (10).

**8.** Procédé de mesure de la conductivité thermique selon trois directions d'un matériau mince anisotrope (10) selon l'une des revendications  précédentes **caractérisé en ce que** ladite étape de positionnement des $N$ capteurs (22) est réalisée au moyen d'un outillage de positionnement (300) permettant de connaître avec une précision inférieure à dix micromètres, la position relative des différentes capteurs (22) par rapport à ladite source de chaleur (21).

**9.** Procédé de mesure de la conductivité thermique trois directions d'un matériau mince anisotrope (10) selon l'une des revendications précédentes **caractérisé en ce que** ledit matériau mince anisotrope est une cellule électrochimique d'une pile à combustible.

**10.** Outillage de positionnement pour la mise en oeuvre du procédé de mesure de la conductivité thermique selon l'une des revendications 1 à 10 **caractérisé en ce qu'il** comporte :

    - un premier peigne (310) présentant une pluralité $N+1$ de rainures (301) ;
    - un deuxième peigne (320) présentant une pluralité $N+1$ de rainures (301) ;

le premier et le deuxième peignes (310, 320) étant agencés de manière à ce que lesdites rainures (301) du premier peigne (310) soient en vis-à-vis des rainures (301) du deuxième peigne (320), lesdites N+1 rainures des peignes étant aptes à recevoir lesdits $N$ capteurs (22) et ladite source de chaleur (21).

**11.** Outillage de positionnement (300) pour la mise en oeuvre du procédé de mesure de la conductivité thermique selon la revendication précédente **caractérisé en ce qu'il** comporte des moyens aptes à maintenir en tension lesdits capteurs (22) et ladite source de chaleur (21).

**Fig. 1**

**Fig. 2**

**Fig. 3**

Ta   α th   Φ   400   {Tn,mes} ; n = 1,..., N

λ th

{Tn,cal} ; n = 1,..., N

L fil chauffant

D fil chauffant

$(T_{n,cal} - T_{n,mes})^2$

**Fig. 4**

λ ech   α ech

| | Europäisches Patentamt<br>European Patent Office<br>Office européen des brevets | **RAPPORT DE RECHERCHE EUROPEENNE** | Numéro de la demande<br>EP 13 17 6058 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y,D | JP 2005 214858 A (NEMOTO EIJI) 11 août 2005 (2005-08-11) * le document en entier * | 1-9 | INV. G01N25/18 |
| Y | JP 2011 164032 A (NEMOTO EIJI) 25 août 2011 (2011-08-25) * abrégé; figure 1 * | 1-9 | |
| Y | FR 2 828 283 A1 (HONDA MOTOR CO LTD [JP]) 7 février 2003 (2003-02-07) * page 1, ligne 1-8 * * page 2, ligne 25-29 * * page 10, ligne 27-31 * * page 16, ligne 6 - page 19, ligne 11 * | 1-9 | |
| Y | FR 2 965 922 A1 (FRANCE ETAT PONTS CHAUSSEES [FR]) 13 avril 2012 (2012-04-13) * page 1, ligne 1-3; figures 2,3 * * page 2, ligne 15 - page 3, ligne 21 * * page 7, ligne 23-29 * * page 10, ligne 31 - page 11, ligne 3 * * page 12, ligne 8-18 * | 1,7 | |
| Y | US 5 297 868 A (GRAEBNER JOHN E [US]) 29 mars 1994 (1994-03-29) | 4 | DOMAINES TECHNIQUES RECHERCHES (IPC)<br>G01N |
| A | * colonne 1, ligne 6-27 * * colonne 5, ligne 56 - colonne 6, ligne 57; figure 1A * | 1-3,5-11 | |
| X | US 2004/255750 A1 (DAIGLE PETER E [US] DAIGLE PETER [US]) 23 décembre 2004 (2004-12-23) * figure 1 * | 10,11 | |
| X | US D 464 851 S1 (DORION CHRISTOPHER [US]) 29 octobre 2002 (2002-10-29) * figure 2 * | 10 | |

Le présent rapport a été établi pour toutes les revendications

| Lieu de la recherche | Date d'achèvement de la recherche | Examinateur |
|---|---|---|
| Munich | 31 octobre 2013 | Filipas, Alin |

**EP 2 685 248 A1**

**ANNEXE AU RAPPORT DE RECHERCHE EUROPEENNE
RELATIF A LA DEMANDE DE BREVET EUROPEEN NO.**

EP 13 17 6058

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-10-2013

| Document brevet cité au rapport de recherche | Date de publication | Membre(s) de la famille de brevet(s) | Date de publication |
|---|---|---|---|
| JP 2005214858 A | 11-08-2005 | JP 4203893 B2<br>JP 2005214858 A | 07-01-2009<br>11-08-2005 |
| JP 2011164032 A | 25-08-2011 | AUCUN | |
| FR 2828283 A1 | 07-02-2003 | FR 2828283 A1<br>JP 4097176 B2<br>JP 2003042984 A<br>US 2003060999 A1 | 07-02-2003<br>11-06-2008<br>13-02-2003<br>27-03-2003 |
| FR 2965922 A1 | 13-04-2012 | EP 2627996 A2<br>FR 2965922 A1<br>WO 2012049417 A2 | 21-08-2013<br>13-04-2012<br>19-04-2012 |
| US 5297868 A | 29-03-1994 | DE 69416367 D1<br>DE 69416367 T2<br>EP 0644418 A1<br>JP 2813137 B2<br>JP H07146266 A<br>US 5297868 A | 18-03-1999<br>26-08-1999<br>22-03-1995<br>22-10-1998<br>06-06-1995<br>29-03-1994 |
| US 2004255750 A1 | 23-12-2004 | AUCUN | |
| US D464851 S1 | 29-10-2002 | AUCUN | |

EPO FORM P0460

Pour tout renseignement concernant cette annexe : voir Journal Officiel de l'Office européen des brevets, No.12/82

11

**EP 2 685 248 A1**

**Documents brevets cités dans la description**

- JP 2005214858 A